# EUROPEAN PATENT SPECIFICATION

(11) **EP 3 533 740 B1**
(45) Date of publication and mention of the grant of the patent: **26.04.2023**
(21) Application number: 19159773.1
(22) Date of filing: 27.02.2019
(51) Int. Cl.: B65H 54/58, B65H 75/24, B29C 70/54

(54) **DEVICE FOR WINDING AN ANCILLARY MATERIAL, SYSTEM FOR THE PLACEMENT OF COMPOSITE MATERIAL AND METHOD FOR THE SEPARATION, WINDING, AND EXTRACTION OF AN ANCIALLARY MATERIAL**
VORRICHTUNG ZUM AUFWICKELN EINES ZUSATZMATERIALS, SYSTEM ZUM PLATZIEREN VON VERBUNDMATERIAL UND VERFAHREN ZUM TRENNEN, AUFWICKELN UND EXTRAHIEREN EINES ZUSATZMATERIALS
DISPOSITIF D'ENROULEMENT D'UN MATÉRIAU AUXILIAIRE, SYSTÈME POUR LA MISE EN PLACE D'UN MATÉRIAU COMPOSITE ET PROCÉDÉ DE SÉPARATION, D'ENROULEMENT ET D'EXTRACTION D'UN MATÉRIAU AUXILIAIRE

(30) Priority: 28.02.2018 ES 201830190
(43) Date of publication of application: 04.09.2019
(73) Proprietor: Airbus Operations, S.L.U., 28906 Getafe (Madrid) (ES)
(72) Inventor: DOMÍNGUEZ GARCÍA, Iván, E-28906 Getafe, Madrid (ES)
(74) Representative: ABG Intellectual Property Law, S.L.

(56) References cited:
- EP-A1- 0 164 003
- EP-A1- 2 145 850
- CH-A5- 641 741
- DE-U1- 9 402 594
- US-A- 494 329
- US-A- 4 842 684
- US-A- 5 465 922

## Description

### Object of the Invention

The present invention relates to a device which allows collecting the ancillary material used as a protective coating and originally adhered to a sheet of composite material wound on a reel. More particularly, the device facilitates the extraction of the ancillary material wound on the device itself, once it has been collected after the placement of the composite material.

This invention likewise relates to a system and a method which allow the separation, storage by winding and extraction of the ancillary material adhered to a composite material supplied in the form of a reel.

### Background of the Invention

Composite material, such as carbon fibre (CFRP) or glass fibre (GFRP) for aeronautic use, for example, is usually supplied in the form of a sheet or tape wound in a reel. In these composite materials, the fibre (carbon or glass) is already embedded in a generally thermosetting resin matrix, such as epoxy, for example.

Generally, the sheet or tape of composite material is presented with a protective coating or ancillary material adhered to its surface, which prevents said composite material wound on the reel from adhering to itself. This ancillary material is usually a protective polyethylene film. The ancillary material must be removed before the composite material is placed to prevent exposing the ancillary material to the curing treatment (high temperature and pressure) to which the composite material is subjected for consolidation.

Due to the delicate conditioning and cleaning conditions of the atmosphere in which the composite material is going to be handled, the tooling and machinery conventionally used to separate the protective film from the tape of composite material is complex and costly in terms of energy consumption, maintenance, and skilled labour.

There are various solutions in the state of the art today for carrying out this process. The most widespread solution consists of applying a vacuum on the protective film through conduits which separate, extract, and conduct the protective film as waste material to chambers or bags for subsequent storage.

This solution of the state of the art presents certain problems, such as the need to frequently empty the waste material from the chambers/bags, the high power consumption of the vacuum pumps and ancillary cooling systems, the loud noise generated by said vacuum pumps with the subsequent associated safety problems, numerous micro-shutdowns during operation due to the saturation of waste material in the extraction conduits, numerous interruptions in the production chain due to the need for multiple cleaning and maintenance hours dedicated to taking care of all the subsystems, among others.

Document EP0164003 describes a device according to the preamble of claim 1 that includes resilient fingers supported around a shaft and a frusto-conical member operative axially to expand the fingers to engage the internal periphery of a reel.

Document US4842684 describes an apparatus for use in the industry of shaping a sheet of fibres on a mould, the apparatus having an applicator for engaging the fibre elements on the mould and, at a place immediately upstream, a wedge-shaped element having a rounded edge and adapted to separate the top protective film from the fibres prior to their engagement with the mould, and a slot sized to the width of the film and operative to remove the same and to provide accurate guiding of the fibres immediately thereafter engaged on the mould.

### Description of the Invention

The present invention proposes a solution to the aforementioned problems by means of a device configured for winding an ancillary material according to claim 1, a system for the placement of composite material according to claim 12, and a method for the separation, winding, and extraction of an ancillary material according to claim 13. Preferred embodiments of the invention are defined in the dependent claims.

A first inventive aspect provides a device for winding an ancillary material originally adhered to a composite material wound on a reel, wherein the device comprises:
- a support mechanism;
- at least two slats, connected to the support mechanism and arranged such that they substantially form a tubular element, thereby defining an internal section between them, wherein the at least two slats comprise a first end and a second end;
- a bar; and
- an end part;

wherein the bar is rigidly attached at a first end to the support mechanism, arranged longitudinally along the inside of the internal section defined by the at least two slats, and configured for being connected at a second end to the end part; and
wherein the end part comprises a connection mechanism configured for being coupled, in a manner which can be uncoupled, with the second end of the bar, such that in the coupled state of the end part the internal section defined by the at least two slats is larger than it is in the uncoupled state of the end part;
wherein the device additionally comprises an arm attached by means of a rotational attachment to the support mechanism, said arm being a swivel arm comprising a pressure spring, in a use situation said arm allowing the device to swivel and be arranged supported on the reel of composite material at all times.

The at least two slats are arranged such that they substantially form a tubular element. Said tubular element is not necessarily continuous in section along its entire length, but rather the slats can be arranged with a space between contiguous slats. Optionally, the at least two slats can be arranged adjacent without leaving any space between contiguous slats, but allowing relative movement between slats.

The ancillary material which is to be wound on the device is originally adhered to a sheet or tape of composite material. However, the device of the invention can also be used for winding other types of ancillary material.

The slats can be connected to the support mechanism directly or indirectly. Indirect connection will be understood to mean the connection made by means of one or several elements.

The slats are elongated and arranged with their longest dimension parallel to the bar.

The device of the invention allows winding the ancillary material on the device and facilitates the removal thereof once wound.

Advantageously, this device prevents the use of additional elements for the separation and storage of the ancillary material (*e.g.* vacuum pumps).

By preventing additional elements, and since the device according to the invention only has mechanical elements, the following are also achieved:
- noise, power consumption, and maintenance hours for conduits are completely eliminated in comparison with the use of vacuum pumps in the state of the art, and
- a more continuous operation since micro-shutdowns, which were once required for emptying the waste material from the chambers or due to the saturation of waste material in the extraction conduits, are no longer needed.

It should be pointed out that unlike the conventional vacuum pump solution, which exceeded 80 dB and made it mandatory to use PPE (personal protective equipment) which can be burdensome when working, the device of the invention allows collecting the ancillary material in a simpler and easier to use manner.

A fundamental aspect of the present invention is the easiness of the extraction of the ancillary material once a volume of ancillary material has been wound on the device. At the same time the ancillary material is being wound around the slats, certain tension is produced in the material winding direction, which exerts a pressure on the outer face of the slats and tries to shrink the internal section between them. Once a desired volume of ancillary material is wound on the device, when the end part is uncoupled, the internal section between the slats decreases, at least in part of the device, releasing the tension in the wound ancillary material and facilitating the removal of the ancillary material from the device.

As discussed, since the internal section between the slats decreases, it greatly facilitates the removal or extraction of said ancillary material from the device by the operator. Once it is off the device, the ancillary material can be placed in a waste container for this purpose, while the operation continuous without additional shutdowns or jams.

Advantageously, the arm allows fixing the device such that in a use situation, the surfaces of the slats are supported on a reel of composite material, keeping the axis of the device parallel with respect to the axis of the reel.

In a use situation this arm allows the device to swivel and be arranged supported on the reel of composite material at all times. Therefore, as the level of composite material decreases, and the level of wound ancillary material increases, the pressure spring of the swivel arm allows the surfaces of the device and of the reel to be in contact at all times.

In a particular embodiment, the at least two slats have a curved cross section. Advantageously, this allows better winding of the ancillary material.

In a particular embodiment, at least one of the slats is fixed at the first end to the support mechanism and supported at the second end on the end part such that the support on the end part determines the size of the internal section defined by the slats in the region of the second end.

In a particular embodiment, the slats are fixed by fasteners hidden from view.

In a particular embodiment of the invention, the connection mechanism of the end part is configured for increasing and reducing the section defined by the at least two slats, such that:
- in its coupled state, at least one of the slats is supported at its second end on the end part, and
- in its uncoupled state, at least one of the slats is not supported on the end part.

Advantageously, the end part provides rigidity to the device as the slats are better secured as a result of the coupling thereof.

In a particular embodiment, the end part comprises a reduction in section on which the second end of the at least one of the slats is supported. This means an improvement in the arrangement of the slats during the coupling/uncoupling of the end device, allowing the slats to slide smoothly along the reduction in section, preventing jerking. Preferably, the reduction in section is a substantially frustoconical shape.

In a particular embodiment, the configuration of the slats is such that when the connection mechanism is uncoupled from the second end of the bar, the slats bend in the region of the second end, producing a progressive decrease in the internal section defined by the slats in the longitudinal direction of the bar. The bending of the slats can be induced by the ancillary material winding tension and/or because the slats are configured such that they tend to bend towards the bar in the absence of an element preventing it.

In a particular embodiment, the at least two slats form a tubular element having a substantially cylindrical internal section.

In a particular embodiment, the slats are arranged spaced from one another, such that there is a through slot between contiguous slats.

In a preferred embodiment, the number of slats is eight.

In a particular embodiment, the at least two slats include at least one first slat fixed at its first end to the support mechanism, and at least one second slat fixed at its second end to the end part, such that the uncoupling of the end part with respect to the bar causes the disconnection of the at least one second slat with respect to the support mechanism. In a preferred embodiment, the uncoupling of the end part causes the movement of the at least one second slat with respect to the at least one first slat. Preferably, the movement is a longitudinal movement parallel to the longitudinal axis of the bar.

In a particular embodiment, the at least one first slat fixed at its first end to the support mechanism comprises rails on its edges along which the at least one second slat moves longitudinally. Additionally, said rails serve as a guide for the movement of the at least one second slat.

In a particular embodiment, the connection mechanism of the end part comprises a housing adapted for inserting the second end of the bar.

In a particular embodiment, the second end of the bar is threaded and the connection mechanism of the end part comprises a threaded housing adapted for inserting said second end.

In a particular embodiment, the device comprises at least two plates and the bar comprises at least two slots parallel to the longitudinal axis of the bar,
wherein said at least two slots comprise in at least part of their extension at least one inclined plane, each slot being configured for housing a plate,
wherein each plate comprises at least one inclined plane configured for being supported on the at least one complementary inclined plane of the slot which houses it, the plates being fixed to the bar in a sliding manner by means of retaining elements,
wherein each slat is fixed to a plate,
wherein the end part comprises a pushing element movable in the longitudinal direction of the bar and pushing means configured for moving the pushing element,
wherein
   - in the uncoupled state of the end part, one end of the plates projects from the slots towards the pushing element, i.e., in a direction of moving away from the support mechanism, and
   - in the coupled state of the end part, the pushing element pushes the ends of the plates towards the support mechanism, causing the sliding of the inclined planes of the plates over the inclined planes of the slots, which facilitates radial movement of the slats due to the joint action of the inclined planes of the plates and the slots.

In a particular embodiment, the pushing element has an annular shape and the connection mechanism of the end part comprises a pin configured for being coupled with the second end of the bar, the pin being inserted through the pushing element, such that the pushing element is linearly movable in the longitudinal direction of the bar.

In a particular embodiment, the pushing means comprise:
▪ an eccentric drive fixed to the pin, with the capacity to turn about a transverse axis with respect to the longitudinal axis of the bar, and comprising a housing for receiving a rod,
▪ a rod configured for being inserted in the housing of the drive,
wherein the rod is adapted for transmitting rotary motion to the drive.

In this embodiment, the rotary motion of the drive is converted into linear motion for pushing the pushing element due to the eccentric shape of the drive.

In one embodiment, the pin is a threaded pin comprising a threaded surface in at least a portion of its extension and a head configured for pushing the pushing element.

In one embodiment, the pin is configured for being coupled with the second end of the bar in a manner which can be uncoupled.

In a particular embodiment, the at least two slats are manufactured from aluminium with an anti-adhesion surface treatment. This allows preventing the ancillary material from sliding as it is wound on the slats, and therefore prevents the lack of coordination of the turning of the device with the turning of the reel of composite material. Furthermore, clusters of material are not created as a result of possible creases produced during the initial winding.

In a second inventive aspect, a system for the placement of composite material wound on a reel is provided, characterised in that the system comprises:
▪ a machine configured for placing the composite material, wherein the machine comprises means for turning the reel with respect to its axis, and
▪ a device according to any of the embodiments of the first inventive aspect.

In one embodiment, the machine is configured such that it allows the support of the device on a reel installed in said machine, such that the turning of the reel causes the turning of the device at the same linear velocity and in counter-rotating direction with respect to the turning direction of the reel. It is understood that the at least two slats of the device are supported and roll on the reel, causing both reel and device to turn at the same linear velocity in counter-rotating direction.

In this embodiment, the machine and the device are configured so that as the machine turns the reel, the device turns in a coordinated manner with respect to the reel, driven by the turning of the reel. Therefore, as the composite material wound on the reel is placed, the ancillary material adhered to its surface is progressively detached and wound on the device.

Advantageously, as the turning is completely integral between device and reel, the turning of the device efficiently assumes the accelerations/decelerations in the process of unwinding ancillary material, without having to use ancillary equipment such as motors, variable speed or frequency drives, servo controllers, or programming, among others. Furthermore, additional energy consumption for turning the device synchronously with the reel is not required.

Additionally, this system significantly reduces maintenance hours and power consumption, as it allows working with air handling units (or ancillary cooling systems) at less than 50% in comparison with the solutions of the state of the art. That is because the device according to any of the embodiments of the first inventive aspect only has mechanical elements.

In a particular embodiment, the machine configured for placing the composite material is an automatic fibre placement machine.

In a third inventive aspect, a method for the separation, winding, and extraction of an ancillary material adhered to a composite material wound on a reel is provided, characterised in that it comprises the following steps:
a) providing a system according to any of the embodiments of the second inventive aspect and a reel comprising wound composite material, wherein the composite material is adhered to an ancillary material and wherein the connection mechanism of the device is coupled with the second end of the bar of the device,
b) securing the initial end of the ancillary material to the slats of the device,
c) supporting the device on the reel,
d) turning the reel for placing the composite material wound thereon, the ancillary material separating from the composite material and said ancillary material being wound on the slats of the device, until winding a volume of ancillary material,
e) uncoupling the end part to reduce the section defined by the at least two slats, and
f) extracting the ancillary material wound on the device.

Advantageously, the present invention allows a substantial increase in the performance speed, increasing process efficiency and reducing production costs. Another additional advantage is that this solution does not cause the tangling of ancillary material on the reel of composite material and increases placement capacity, with the system of the present invention reaching a placement capacity of 100%. In contrast, the solutions of the state of the art only reach a composite material placement capacity of 70%.

### Description of the Drawings

These and other features and advantages of the invention will become more apparent based on the following detailed description of a preferred embodiment, given only by way of nonlimiting illustrative example in reference to the attached figures.
Figures 1a-b show a first embodiment of the device according to the invention, wherein the end part is uncoupled and coupled, respectively.
Figure 2 shows a second embodiment of the device according to the invention, wherein at least one slat is extractable.
Figures 3a-3e show a third embodiment of the device according to the invention, wherein the slats change the internal section by means of a radial movement thereof.
Figures 4a-e show a system for the placement of composite material according to the invention.

### Detailed Description of the Invention

The present invention defines a device (10) for winding an ancillary material (21). The device (10) comprises a support mechanism (1), at least two slats (2), a bar (3), and an end part (4).

The at least two slats (2) are connected to the support mechanism (1) and arranged such that they substantially form a tubular element, thereby defining an internal section between the slats (2). The slats (2) comprise a first end (2.1) and a second end (2.2).

The bar (3) is rigidly attached at a first end (3.1) to the support mechanism (1), arranged longitudinally along the inside of the internal section defined by the at least two slats (2), and configured for being connected at a second end (3.2) to the end part (4).

The end part (4) comprises a connection mechanism (4.2) configured for being coupled, in a manner which can be uncoupled, with the second end (3.2) of the bar (3), such that in the coupled state of the end part (4) the internal section defined by the at least two slats (2) is larger than it is in the uncoupled state of the end part (4).

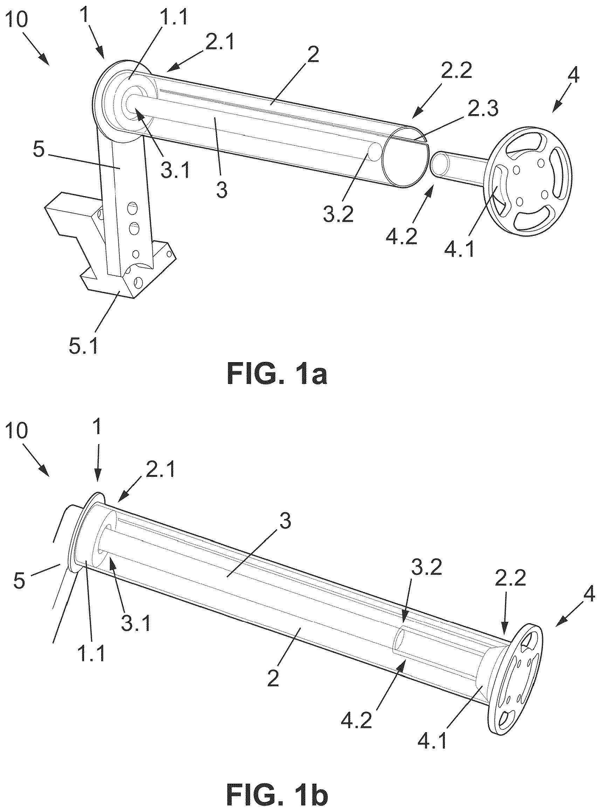

Figures 1a and 1b show a device (10) for winding an ancillary material (21) according to a first embodiment of the present invention.

Figure 1a schematically shows the configuration of the elements that are part of the device (10) of this embodiment when the end part (4) is uncoupled. Figure 1b shows this same configuration of elements when the end part (4) is coupled. As can be seen, said coupling/uncoupling of the end part (4) occurs between the second end (3.2) of the bar (3) and the connection mechanism (4.2) of the end part (4) in a coaxial manner.

In this embodiment, the end part (4) is a body of revolution at the end of which the connection mechanism (4.2) is located. The connection mechanism (4.2) is a housing adapted for inserting the second end (3.2) of the bar (3). Preferably, the connection mechanism (4.2) is a threaded housing and the second end (3.2) of the bar (3) is also threaded to allow said coupling.

Additionally, the end part (4) comprises a reduction in section (4.1) on which the second end (2.2) of the at least one of the slats (2) is supported. Said reduction in section (4.1) is substantially frustoconical so as to allow the slats to slide smoothly along this reduction in section during the coupling/uncoupling of the end part.

In this embodiment, the slats (2) form a tubular element, defining a substantially cylindrical internal section along their entire length between their first end (2.1) and second end (2.2). Said tubular element furthermore can be divided by means of through slots (2.3) extending from the first end (2.1) to the second end (2.2), thereby forming the separation between slats (2) .

Said slats are connected, preferably adhered, to the support mechanism (1) through an annular projection (1.1) thereof. Said annular projection (1.1) defines the cross-section shape of the internal section between slats in the region of the first end (2.1), being substantially circular in this particular example. Nevertheless, other cross-section shapes are allowable, such as polygonal, for example, being defined by the number, shape, and arrangement of the slats (2).

In this embodiment, the support of the slats (2) at their second end (2.2) on the end part (4), in particular on the reduction in section (4.1), determines the size of the internal section defined by the slats in the region of the second end (2.2). In this embodiment, when the end part (4) is uncoupled, the slats (2) remain fitted at their first end (2.1) to the support mechanism (1), and are cantilevered at their second end (2.2).

Preferably, the slats (2) are manufactured from aluminium with an anti-adhesion surface treatment.

In this embodiment, the device (10) includes an arm (5) attached in a rotational manner to the support mechanism (1). Therefore, the support mechanism (1) can freely turn with respect to the arm (5). This allows providing rotary motion to the whole device. In this embodiment, the arm (5) is a swivel arm comprising a pressure spring (5.1).

In a use situation of the device (10), when the ancillary material (21) is wound around the slats (2), certain tension is produced in the winding direction of the ancillary material (21), which therefore exerts a pressure on the outer face of the slats (2) and tends to reduce the internal section between them.

Given that these slats (2) are fixed to the support mechanism (1) at their first end (2.1) and supported on the end part (4) at their second end (2.2), the slats (2) try to maintain their substantially tubular arrangement with a substantially cylindrical internal section. However, given the pressure exerted by the ancillary material (21) being wound on the slats (2), the slats (2) may bend at a certain degree and acquire the arrangement of a hyperboloid of one sheet.

Upon uncoupling the connection mechanism (4.2) of the end part (4) from the second end (3.2) of the bar (3), the slats (2) are no longer supported on the end part (4) in the region of the second end (2.2). Therefore, the pressure of the ancillary material causes the bending of the slats (2) in the region of their seconds ends (2.2) and a progressive decrease in the internal section defined by the slats (2) is produced in the longitudinal direction of the bar (3).

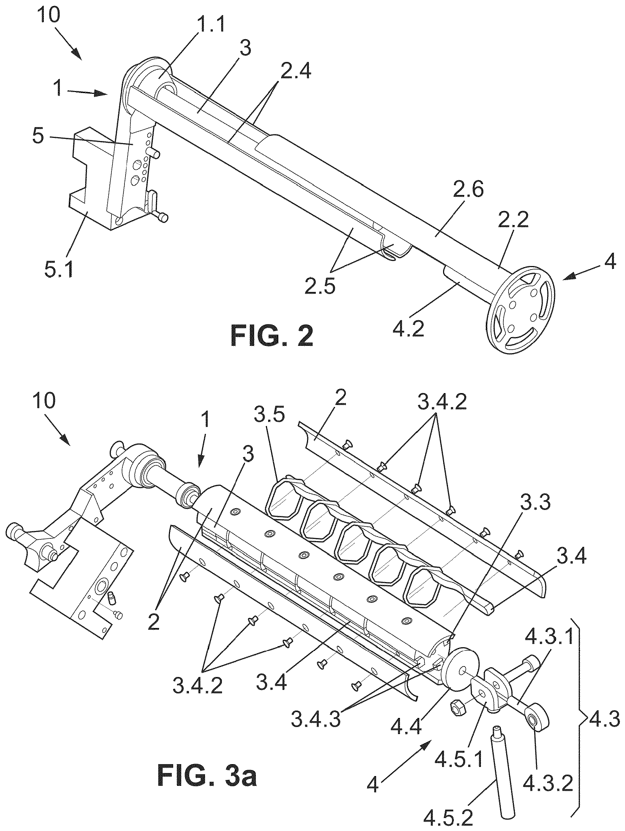

Figure 2 shows a second embodiment of the device (10) of the invention, wherein at least one slat is extractable. In this embodiment, the at least two slats include:
- at least one first slat (2.5) fixed at its first end (2.1) to the support mechanism (1), and
- at least one second slat (2.6) fixed at its second end (2.2) to the end part (4).

In this embodiment, the uncoupling of the connection mechanism (4.2) of the end part (4) with respect to the bar (3) causes the movement of the at least one second slat (2.6) with respect to the at least one first slat (2.5), the second slat (2.6) thereby being extractable.

Preferably, the first slats (2.5) comprise rails on its edges adjacent to the edges of the second extractable slat (2.6). The extractable second slat (2.6) moves along these rails longitudinally. Additionally, said rails serve as a guide for the movement of the at least one second slat (2.6).

Preferably, the device of this embodiment has three slats (2), particularly:
- two first slats (2.5) fixed at their first ends (2.1) to the support mechanism (1), for example by means of hidden fasteners, and
- a second slat (2.6) fixed at its second end (2.2) to the end part (4), for example by means of hidden fasteners.

In this embodiment, the second slat is connected to the support mechanism (1) indirectly, by means of the fixing thereof with the end part (4).

In a use situation of the device, once a suitable volume of ancillary material has been wound or the maximum storage level in the device (10) has been reached, it is then extracted. In this embodiment, upon uncoupling the end part (4), the end part (4) is extracted together with the second extractable slat (2.6). After this, the internal section between slats is reduced due to the separation of the second slat (2.6), which facilitates extraction of the ancillary material by an operator.

Figures 3a-3e show a device (10) configured for winding an ancillary material according to a third embodiment of the present invention. The bar (3) of said device (10) comprises:
- at least two slots (3.3) parallel to the longitudinal axis of the bar (3), each with an inclined plane (3.3.1) in at least one portion of the extension of its inner surface, and
- at least two plates (3.4) housed in respective slots (3.3), each with at least one inclined plane (3.4.1) configured for being supported on a complementary inclined plane (3.3.1) of the slot (3.3) which houses it.

The plates (3.4) are fixed in a slidable manner to the bar (3) by means of retaining elements (3.5). Furthermore, the plates (3.4) comprise fixing means (3.4.2) configured for fixing the slats (2), so the connection of the at least two slats to the support mechanism is indirect through the bar (3) in this particular example.

Furthermore, the end part (4) of the device (10) comprises:
- a pushing element (4.4) with an annular shape and movable in the longitudinal direction of the bar (3), i.e., in a manner coaxial with the bar, and
- pushing means configured for moving the pushing element (4.4).

In the embodiment of Figures 3a-3c, the connection mechanism (4.2) of the end part (4) comprises a pin (4.3) comprising a first end (4.3.1) and an eye (4.3.2) at its opposite end, therefore substantially being in the form of a key. The first end (4.3.1) of the pin (4.3) is configured for being coupled, in a manner which can be uncoupled, with the second end (3.2) of the bar (3).

Furthermore, the pin (4.3) is inserted through a hole of the pushing element (4.4), such that the pushing element (4.4) is linearly movable along the axis of the bar (3) according to the coupling of the pin (4.3).

The pushing means comprise:
▪ a drive (4.5.1) comprising a housing for receiving a rod (4.5.2), and
▪ a rod (4.5.2) configured for being inserted in the drive (4.5.1).

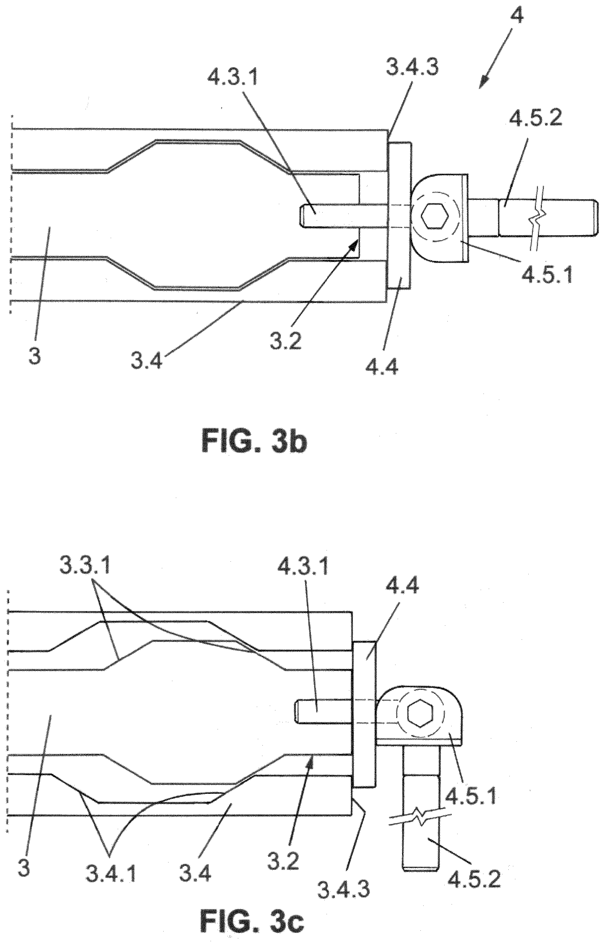

The transition between the coupled/uncoupled state, or vice versa, is schematically shown in Figures 3b and 3c. It can be seen in these figures that:
- in the uncoupled state of the end part (4) (Figure 3b), the ends (3.4.3) of the plates project from the slots (3.3) towards the pushing element (4.4), i.e., they project in a direction of moving away from the support mechanism (1), and
- in the coupled state of the end part (4) (Figure 3c), the pushing element (4.4) pushes the ends (3.4.3) of the plates (3.4) towards the support mechanism (1), causing the sliding of the inclined planes (3.4.1) of the plates (3.4) over the inclined planes (3.3.1) of the slots (3.3), which facilitates radial movement of the slats (2) due to the joint action of the inclined planes of the plates and the slots.

In the embodiment of Figures 3a-3c, the drive (4.5.1) is a substantially oval-shaped eccentric element. The coupling of the end part (4) (defined in this embodiment as the pushing of the ends (3.4.3) of the plates (3.4) towards the support mechanism) is produced by the different distance from the edges of the drive (4.5.1), which is substantially oval-shaped, to a turning axis.

In this sense, after the pin (4.3) is inserted a given distance in the bar (3), starting from the position shown in Figure 3b, with a 90° turn of the drive (4.5.1) caused by the rod (4.5.2), the edges of the drive farthest away from the turning axis push the pushing element (4.4), which in turn pushes the projecting end of the plates (3.4.3), as shown in Figure 3c. To produce the uncoupling, upon return of the drive (4.5.1) by means of a -90° turn to the position of Figure 3b, i.e., in the opposite direction, the edges of the drive in contact with the pushing element (4.4) become those that are closest to the turning axis, which causes the inclined planes of the plates and slots to slide due to the action of the retaining elements (3.5) which try to shrink the plates, and the ends of the plates to project from the slots (3.3) in a direction of moving away from the support mechanism (1).

In a preferred embodiment, the 90° turn of the drive (4.5.1) produces a forward movement of the pushing element (4.4) of 5 mm.

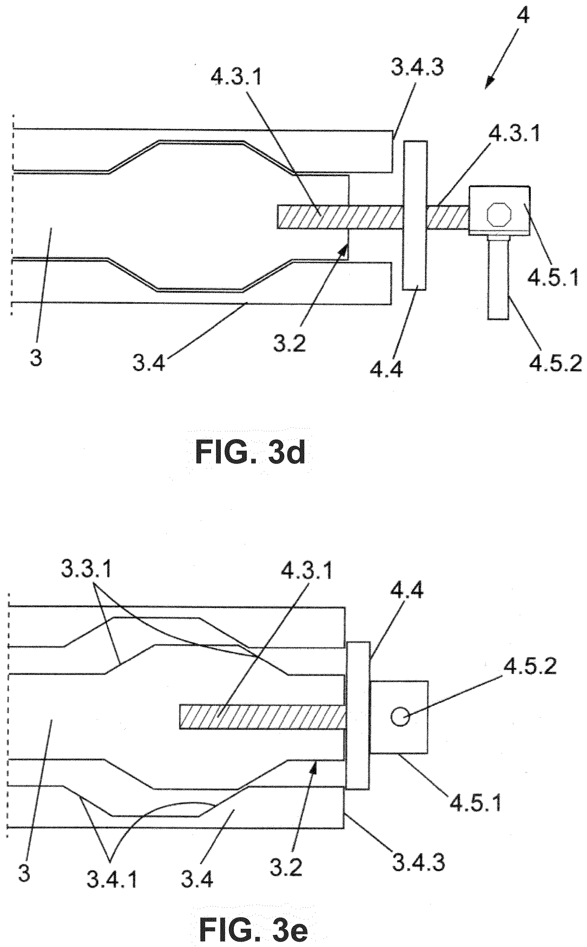

Figures 3d and 3e show a different embodiment of the end part. In this embodiment, the connection mechanism (4.2) of the end part (4) comprises a threaded pin (4.3) comprising a threaded end (4.3.1) configured for being coupled, in a manner which can be uncoupled, with the second end (3.2) of the bar (3).

The threaded pin (4.3) is inserted through a hole of the pushing element (4.4), such that the pushing element (4.4) is linearly movable along the axis of the bar (3) according to the coupling of the threaded pin (4.3). In other words, as the threaded pin (4.3) is coupled to the bar (3), said bar cooperates and coaxially pushes the pushing element (4.4) so it can in turn push the ends (3.4.3) of the plates (3.4) towards the support mechanism (1), causing the sliding of the inclined planes (3.4.1) of the plates (3.4) over the inclined planes (3.3.1) of the slots (3.3). The coupling of the end part (4) is produced in that manner in this particular example.

In the embodiment of Figures 3d and 3e, the pushing means comprise a drive (4.5.1) comprising a housing for receiving a rod (4.5.2) and configured for turning integrally with the threaded pin (4.3). The action on the drive (4.5.1) thereby causes the pin (4.3) to be screwed into the threaded hole of the bar (3), which results in a linear motion for pushing the pushing element (4.4) as the threaded pin (4.3.1) is introduced. The pushing of the ends of the plates by the pushing element (4.4) results in a radial movement of the slats and in an increase in the internal section defined between slats, as described above. The rod (4.5.2) facilitates the turning of the drive (4.5.1).

In this embodiment, the uncoupling and the decrease in internal section defined between slats are achieved by means of the turning of the threaded pin (4.3) in the opposite direction, which causes the threaded pin (4.3) to become unscrewed from the bar (3) and the inclined planes of the plates and the slots to slide, also as a result of the action of the retaining elements (3.5) which try to shrink the internal section defined by the plates.

In a variation of the embodiment of Figures 3d and 3e, the head itself of the threaded pin (4.3) has dimensions suitable for pushing the pushing element and is used as pushing means. In this embodiment, the head of the threaded pin pushes the pushing element as the threaded pin (4.3) is screwed into the threaded hole of the bar (3), where the drive can be dispensed with.

As it has been seen, in the embodiments of Figures 3a-3e the coupling can be
- due to the actual insertion of a threaded pin (4.3) in the bar (3) which pushes the pushing element (4.4) by means of a drive (4.5.1) or by means of the head itself of the threaded pin;
- due to a turning of an eccentric drive (4.5.1) about a transverse axis with respect to the axis of the bar (3).

In one embodiment, in the uncoupled state, the slats (2) substantially form a tubular element having a circular section and diameter of 59 mm, whereas in the coupled state they form a tubular element having a circular section and diameter of 64 mm.

Therefore, once a suitable volume is wound or the maximum storage level of ancillary material in the device (10) has been reached, upon uncoupling the end part the internal section between the slats decreases. Like in the devices of the other embodiments, as the internal section defined between slats decreases, winding tensions are released, facilitating the removal or extraction of said ancillary material from the device by the operator.

Finally, in the embodiment of the device (10) shown in Figures 3a-3e, the support mechanism (1) can freely turn with respect to an arm (5) to which it is attached by means of rotational attachment. This allows providing rotary motion to the whole device. Preferably, the arm (5) is a swivel arm comprising a pressure spring (5.1).

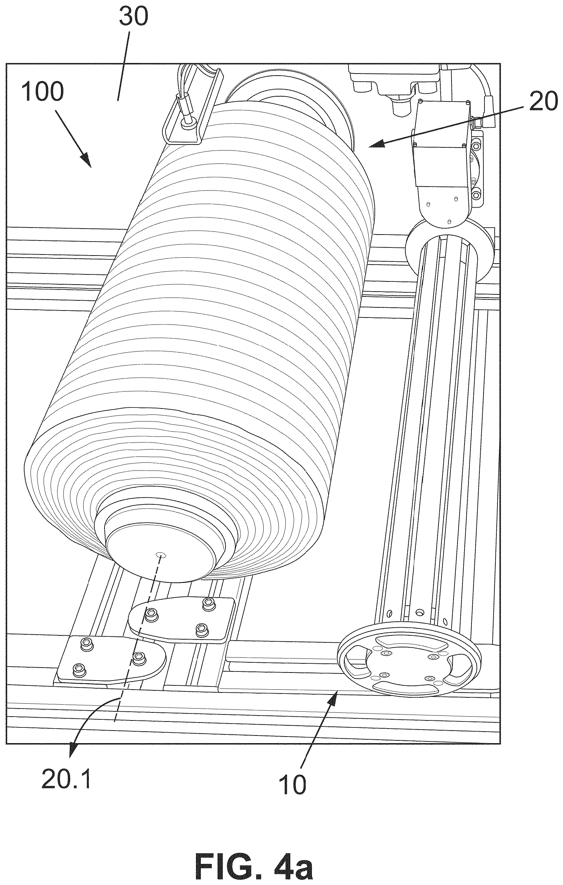

Figures 4a to 4e show a system for the placement of composite material according to the invention, comprising a machine and a device.

In particular, the system (100) for the placement of composite material (22) shown in said figures comprises:
▪ a machine (30) configured for automatically placing the wound composite material (22) on a reel (20), which turns with respect to an axis (20.1), and
▪ a device (10) for winding the ancillary material (21) originally adhered to the sheet of composite material (22), the device (10) being like any of those shown in Figures 1a to 3e.

The composite material (22) has ancillary material (21) originally adhered thereto, i.e., when it is wound on the reel (20) .

In the system (100), the device (10) is configured for turning at the same linear velocity of the reel (20), in counter-rotating direction. This is by supporting and bearing both. In the preceding case, the use of variable speed drives or servo controllers is eliminated.

The slats (2) of the device (10) are supported and roll on the reel (20), causing them both to turn at the same linear velocity in counter-rotating direction. That is, the device (10) and the reel (20) have a rolling contact point which does not slide with respect to the other, or said otherwise, the relative speed between device (10) and reel (20) at that point is 0.

The device (10) comprises a support mechanism (1) which can freely turn with respect to an arm (5), to which it is attached by means of rotational attachment. This allows providing rotary motion to the whole device. The arm (5) is a swivel arm comprising a pressure spring (5.1), so the arm (5) swivels between a position where the device (10) is separated from the reel (20), and another position where both are supported at all times on one another as a result of the pressure spring (5.1).

In a preferred embodiment, the machine (30) is an automatic fibre placement machine.

Furthermore, Figures 4a to 4e schematically show the steps of the method according to the present invention. Said method is a method for the separation, winding, and extraction of an ancillary material (21) adhered to a sheet of composite material (22) wound on a reel (20).

Figure 4a shows a device (10) according to any of the devices shown in Figures 1a to 3e and a reel (20). Furthermore, the connection mechanism (4.2) of the device (10) is coupled with the second end (3.2) of the bar (3) of the device (10).

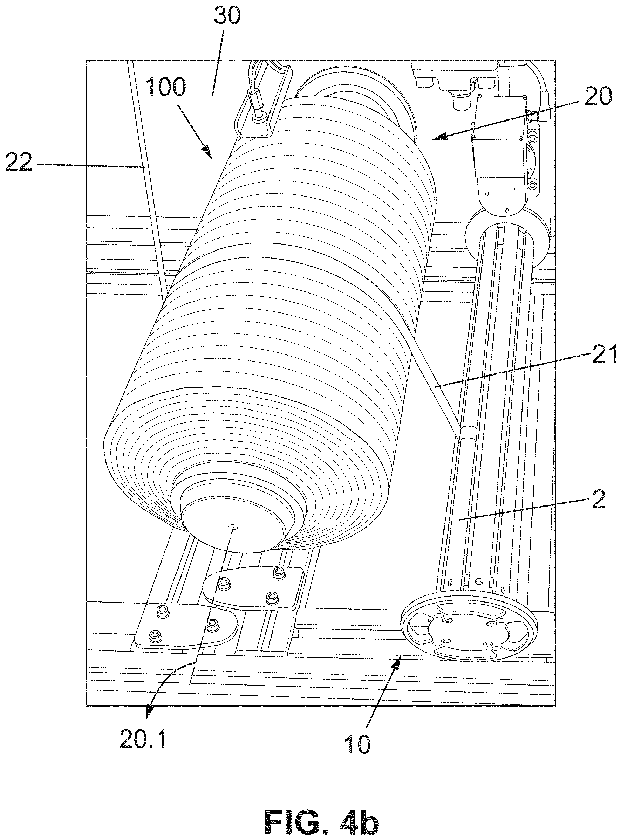

Figure 4b allows observing how the initial end of the ancillary material (21) is secured to the slats (2) of the device (10). In this particular example, it can be seen that said initial end is tied to one of the slats (2). However, other options such as hooking, looping, retaining, or catching, are possible.

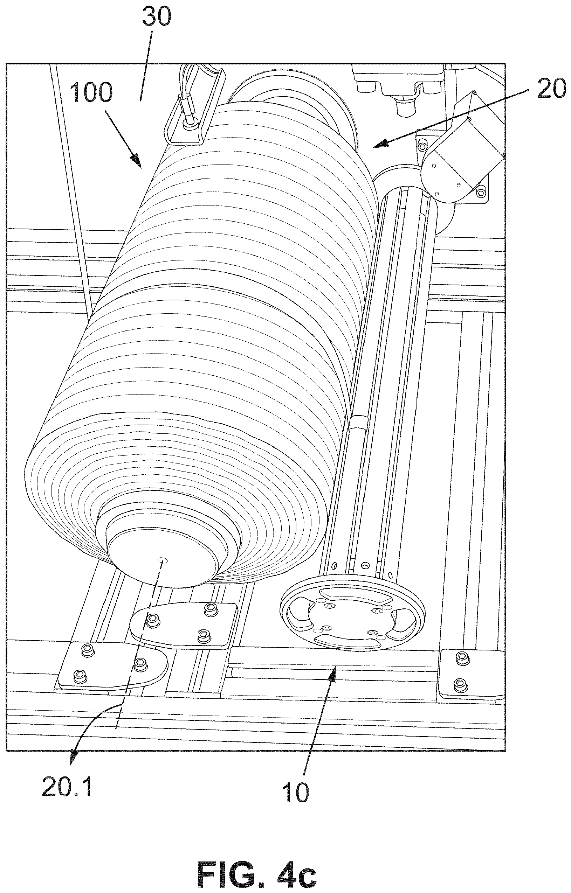

Figure 4c allows observing how the at least two slats (2) of the device (10) are supported on the reel (20). In particular, in this figure the device comprises a swivel arm (5) which furthermore comprises a pressure spring (5.1) for keeping the device (10) and the reel (20) in contact at all times.

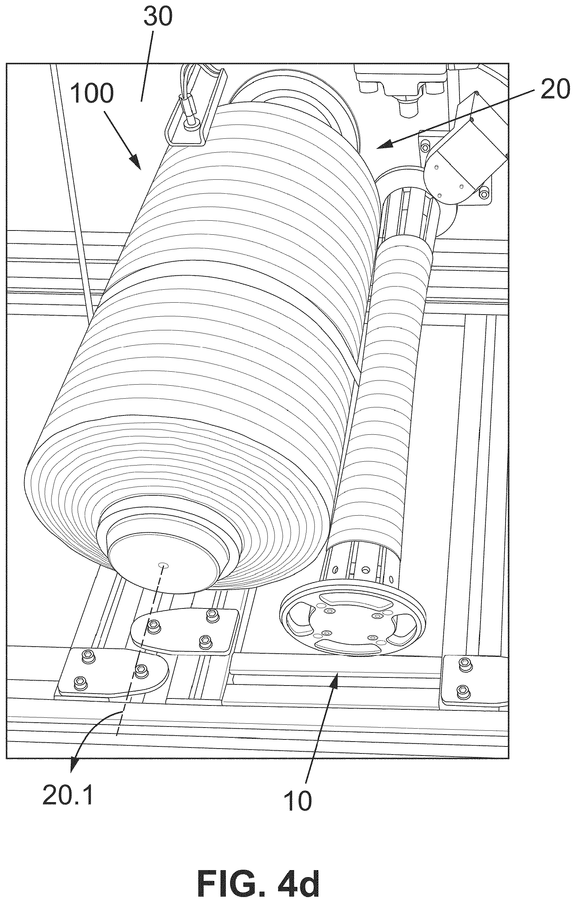

In Figure 4d it can be seen how upon turning the reel (20) for placing the wound composite material thereon, the ancillary material (21) separates from the sheet of composite material (22) and winds itself on the slats (2) of the device (10) to achieve a volume of ancillary material (21).

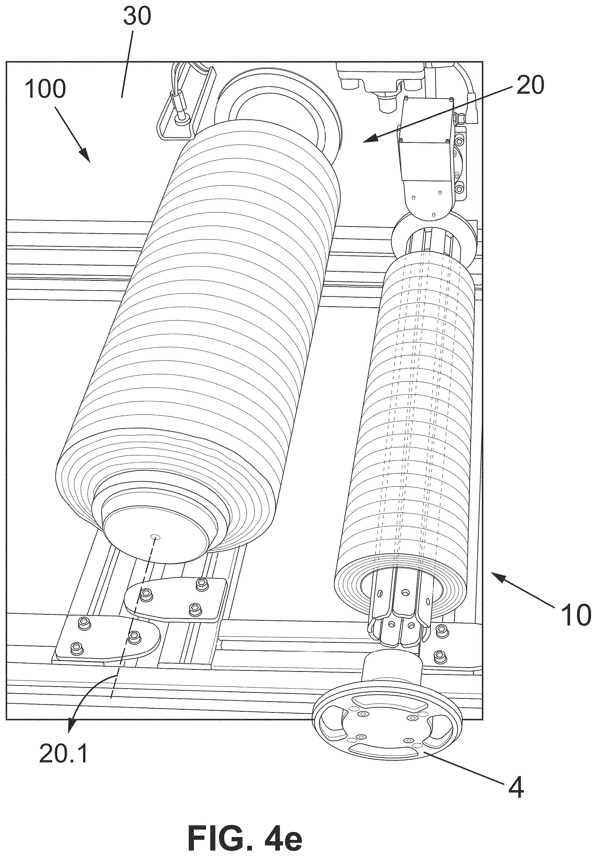

In Figure 4e it can be seen how the end part (4) is uncoupled to reduce the section defined by the at least two slats (2). Once a suitable volume has been wound or the maximum storage level of ancillary material in the device (10) has been reached, the operator in charge uncouples said end part (4), which decreases the internal section between the slats (2) and produces the release of tensions in the wound material (21).

Like in the devices of the previous figures, as the section between slats decreases, winding tensions are released, facilitating the removal or extraction of said ancillary material of the device by the operator.

In a particular embodiment not shown, the system (100) comprises a machine (30) and several devices (10), which can wind ancillary material (21) wound on the same reel (20) or simultaneously, without having to perform shutdowns for the placement of composite material (22) between interchanges of the device (10) while working.

## Claims

1. A device (10) for winding an ancillary material (21) originally adhered to a composite material (22) wound on a reel (20), wherein the device (10) comprises:
a support mechanism (1);
at least two slats (2), connected to the support mechanism (1) and arranged such that they substantially form a tubular element, thereby defining an internal section between them, wherein the at least two slats (2) comprise a first end (2.1) and a second end (2.2);
a bar (3); and
an end part (4);
wherein the bar (3) is rigidly attached at a first end (3.1) to the support mechanism (1), arranged longitudinally along the inside of the internal section defined by the at least two slats (2), and configured for being connected at a second end (3.2) to the end part (4); and
wherein the end part (4) comprises a connection mechanism (4.2) configured for being coupled, in a manner which can be uncoupled, with the second end (3.2) of the bar (3), such that in the coupled state of the end part (4) the internal section defined by the at least two slats (2) is larger than it is in the uncoupled state of the end part (4);
wherein the device (10) is **characterised in that** it additionally comprises an arm (5) attached by means of a rotational attachment to the support mechanism (1), said arm (5) being a swivel arm comprising a pressure spring (5.1), in a use situation said arm allowing the device (10) to swivel and be arranged supported on the reel (20) of composite material (22) at all times.

2. The device (10) according to claim 1, **characterised in that** at least one of the slats (2) is fixed at the first end (2.1) to the support mechanism (1) and supported at the second end (2.2) on the end part (4) such that the support on the end part (4) determines the size of the internal section defined by the slats (2) in the region of the second end (2.2).

3. The device (10) according to claim 2, **characterised in that** the end part (4) comprises a reduction in section (4.1) on which the second end (2.2) of the at least one of the slats (2) is supported.

4. The device (10) according to claim 2 or 3, **characterised in that** the configuration of the slats (2) is such that when the connection mechanism (4.2) is uncoupled from the second end (3.2) of the bar (3), the slats (2) bend in the region of the second end (2.2), producing a progressive decrease in the internal section defined by said slats (2) in the longitudinal direction of the bar (3).

5. The device (10) according to claim 1, **characterised in that** the at least two slats (2) include at least one first slat (2.5) fixed at its first end (2.1) to the support mechanism (1), and at least one second slat (2.6) fixed at its second end (2.2) to the end part (4), such that the uncoupling of the end part (4) with respect to the bar (3) causes the disconnection of the at least one second slat (2.6) with respect to the support mechanism (1).

6. The device (10) according to claim 1, **characterised in that** it comprises at least two plates (3.4), and **in that** the bar (3) comprises at least two slots (3.3) parallel to the longitudinal axis of the bar (3),
wherein said at least two slots (3.3) comprise in at least part of their extension at least one inclined plane (3.3.1), each slot (3.3) being configured for housing a plate (3.4),
wherein each plate (3.4) comprises at least one inclined plane (3.4.1) configured for being supported on the at least one complementary inclined plane (3.3.1) of the slot (3.3) which houses it, the plates (3.4) being fixed to the bar (3) in a sliding manner by means of retaining elements (3.5),
wherein each slat (2) is fixed to a plate (3.4),
wherein the end part (4) comprises a pushing element (4.4) movable in the longitudinal direction of the bar (3) and pushing means configured for moving the pushing element (4.4),
wherein
• in the uncoupled state of the end part (4), one end (3.4.3) of the plates projects from the slots (3.3) towards the pushing element (4.4), and
• in the coupled state of the end part (4), the pushing element (4.4) pushes the ends (3.4.3) of the plates (3.4) towards the support mechanism (1), causing the sliding of the inclined planes (3.4.1) of the plates (3.4) over the inclined planes (3.3.1) of the slots (3.3), which facilitates radial movement of the slats (2) due to the joint action of the inclined planes of the plates and the slots.

7. The device (10) according to the preceding claim, **characterised in that** the pushing element (4.4) has an annular shape and the connection mechanism of the end part (4) comprises a pin (4.3) configured for being coupled with the second end (3.2) of the bar (3), the pin (4.3) being inserted through the pushing element (4.4), such that the pushing element (4.4) is linearly movable in the longitudinal direction of the bar (3).

8. The device (10) according to claim 7, **characterised in that** the pushing means comprise:
▪ an eccentric drive (4.5.1) fixed to the pin (4.3), with the capacity to turn about a transverse axis with respect to the longitudinal axis of the bar (3), and comprising a housing for receiving a rod (4.5.2),
▪ a rod (4.5.2) configured for being inserted in the housing of the drive (4.5.1),
wherein the rod (4.5.2) is adapted for transmitting rotary motion to the drive (4.5.1).

9. The device (10) according to claim 7, **characterised in that** the pin (4.3) is a threaded pin comprising a threaded surface (4.3.1) in at least a portion of its extension and a head configured for pushing the pushing element (4.4).

10. The device (10) according to any of the preceding claims, **characterised in that** the slats are arranged spaced from one another, such that there is a through slot between contiguous slats.

11. The device (10) according to any of the preceding claims, **characterised in that** the connection mechanism (4.2) of the end part (4) comprises a housing adapted for inserting the second end (3.2) of the bar (3), preferably the second end (3.2) of the bar (3) and the housing being threaded.

12. A system (100) for the placement of composite material (22) wound on a reel (20), **characterised in that** the system (100) comprises:
▪ a machine (30), preferably an automatic fibre placement machine, configured for placing the composite material (22), wherein the machine (30) comprises means for turning the reel (20) with respect to its axis (20.1), and
▪ a device (10) according to any of claims 1 to 11;
wherein
the machine (30) is configured such that it allows the support of the device (10) on a reel (20) installed in the machine (30), such that the turning of the reel (20) causes the turning of the device at the same linear velocity and in counter-rotating direction with respect to the turning direction of the reel (20) .

13. A method for the separation, winding, and extraction of an ancillary material (21) adhered to a composite material (22) wound on a reel (20), **characterised in that** it comprises the following steps:
a) providing a system (100) according to claim 12 and a reel (20) comprising wound composite material (22), wherein the composite material (22) is adhered to an ancillary material (21) and wherein the connection mechanism (4.2) of the device (10) is coupled with the second end (3.2) of the bar (3) of the device (10),
b) securing the initial end of the ancillary material (21) to the slats (2) of the device (10),
c) supporting the device (10) on the reel (20),
d) turning the reel (20) for placing the composite material wound thereon, the ancillary material (21) separating from the composite material (22) and said ancillary material (21) being wound on the slats (2) of the device (10), until winding a volume of ancillary material (21),
e) uncoupling the end part (4) to reduce the section defined by the at least two slats (2), and
f) extracting the ancillary material (21) wound on the device (10).

## Patentansprüche

1. Vorrichtung (10) zum Aufwickeln eines Hilfsmaterials (21), das ursprünglich an einem auf eine Rolle (20) aufgewickelten Verbundmaterial (22) haftete, wobei die Vorrichtung (10) Folgendes umfasst:
einen Stützmechanismus (1);
mindestens zwei Leisten (2), die mit dem Stützmechanismus (1) verbunden und derart angeordnet sind, dass sie im Wesentlichen ein rohrförmiges Element bilden, wodurch ein interner Abschnitt zwischen ihnen definiert ist, wobei die mindestens zwei Leisten (2) ein erstes Ende (2.1) und ein zweites Ende (2.2) umfassen;
einen Stab (3); und
ein Endteil (4);
wobei der Stab (3) starr an einem ersten Ende (3.1) des Stützmechanismus (1) angebracht, in Längsrichtung entlang der Innenseite des durch die mindestens zwei Leisten (2) definierten internen Abschnitts angeordnet und dazu ausgelegt ist, an einem zweiten Ende (3.2) mit dem Endteil (4) verbunden zu sein; und
wobei das Endteil (4) einen Verbindungsmechanismus (4.2) umfasst, der dazu ausgelegt ist, in einer entkoppelbaren Weise mit dem zweiten Ende (3.2) des Stabes (3) derart gekoppelt zu sein, dass in dem gekoppelten Zustand des Endteils (4) der durch die mindestens zwei Leisten (2) definierte interne Abschnitt größer ist, als er in dem entkoppelten Zustand des Endteils (4) ist;
wobei die Vorrichtung (10) **dadurch gekennzeichnet ist, dass** sie zusätzlich einen Arm (5) umfasst, der mittels einer Drehbefestigung an dem Stützmechanismus (1) angebracht ist, wobei der Arm (5) ein Schwenkarm ist, der eine Druckfeder (5.1) umfasst, wobei in einer Einsatzsituation der Arm der Vorrichtung (10) ermöglicht, zu schwenken und jederzeit an der Rolle (20) des Verbundmaterials (22) gestützt angeordnet zu sein.

2. Vorrichtung (10) nach Anspruch 1, **dadurch gekennzeichnet, dass** mindestens eine der Leisten (2) an dem ersten Ende (2.1) an dem Stützmechanismus (1) fixiert und an dem zweiten Ende (2.2) derart an dem Endteil (4) gestützt ist, dass die Stützung an dem Endteil (4) die Größe des durch die Leisten (2) definierten internen Abschnitts im Bereich des zweiten Endes (2.2) bestimmt.

3. Vorrichtung (10) nach Anspruch 2, **dadurch gekennzeichnet, dass** das Endteil (4) eine Reduktion im Abschnitt (4.1) umfasst, an dem das zweite Ende (2.2) der mindestens einen der Leisten (2) gestützt ist.

4. Vorrichtung (10) nach Anspruch 2 oder 3, **dadurch gekennzeichnet, dass** die Auslegung der Leisten (2) derart ist, dass, wenn der Verbindungsmechanismus (4.2) von dem zweiten Ende (3.2) des Stabes (3) entkoppelt ist, sich die Leisten (2) im Bereich des zweiten Endes (2.2) biegen, wodurch eine zunehmende Verringerung in dem durch die Leisten (2) definierten internen Abschnitt in der Längsrichtung des Stabes (3) erzeugt wird.

5. Vorrichtung (10) nach Anspruch 1, **dadurch gekennzeichnet, dass** die mindestens zwei Leisten (2) mindestens eine erste Leiste (2.5), die an ihrem ersten Ende (2.1) an dem Stützmechanismus (1) fixiert ist, und mindestens eine zweite Leiste (2.6), die an ihrem zweiten Ende (2.2) an dem Endteil (4) fixiert ist, umfassen, so dass das Entkoppeln des Endteils (4) in Bezug auf den Stab (3) die Trennung der mindestens einen zweiten Leiste (2.6) in Bezug auf den Stützmechanismus (1) bewirkt.

6. Vorrichtung (10) nach Anspruch 1, **dadurch gekennzeichnet, dass** sie mindestens zwei Platten (3.4) umfasst, und dadurch, dass der Stab (3) mindestens zwei Schlitze (3.3) parallel zu der Längsachse des Stabes (3) umfasst,
wobei die mindestens zwei Schlitze (3.3) in zumindest einem Teil ihrer Erstreckung mindestens eine geneigte Ebene (3.3.1) umfassen, wobei jeder Schlitz (3.3) dazu ausgelegt ist, eine Platte (3.4) aufzunehmen,
wobei jede Platte (3.4) mindestens eine geneigte Ebene (3.4.1) umfasst, die dazu ausgelegt ist, an der mindestens einen komplementären geneigten Ebene (3.3.1) des Schlitzes (3.3), der sie aufnimmt, gestützt zu sein, wobei die Platten (3.4) an dem Stab (3) in einer verschiebbaren Weise mittels Halteelementen (3.5) fixiert sind,
wobei jede Leiste (2) an einer Platte (3.4) fixiert ist,
wobei das Endteil (4) ein Schiebeelement (4.4), das in der Längsrichtung des Stabes (3) beweglich ist, und Schiebemittel, die dazu ausgelegt sind, das Schiebeelement (4.4) zu bewegen, umfasst,
wobei
• in dem entkoppelten Zustand des Endteils (4) ein Ende (3.4.3) der Platten aus den Schlitzen (3.3) hin zu dem Schiebeelement (4.4) hervorsteht, und
• in dem gekoppelten Zustand des Endteils (4) das Schiebeelement (4.4) die Enden (3.4.3) der Platten (3.4) hin zu dem Stützmechanismus (1) schiebt, was das Verschieben der geneigten Ebenen (3.4.1) der Platten (3.4) über die geneigten Ebenen (3.3.1) der Schlitze (3.3) bewirkt, was eine radiale Bewegung der Leisten (2) aufgrund der gemeinsamen Wirkung der geneigten Ebenen der Platten und der Schlitze ermöglicht.

7. Vorrichtung (10) nach dem vorhergehenden Anspruch, **dadurch gekennzeichnet, dass** das Schiebeelement (4.4) eine ringförmige Form aufweist und der Verbindungsmechanismus des Endteils (4) einen Stift (4.3) umfasst, der dazu ausgelegt ist, mit dem zweiten Ende (3.2) des Stabes (3) gekoppelt zu sein, wobei der Stift (4.3) durch das Schiebeelement (4.4) derart eingesetzt ist, dass das Schiebeelement (4.4) linear in der Längsrichtung des Stabes (3) beweglich ist.

8. Vorrichtung (10) nach Anspruch 7, **dadurch gekennzeichnet, dass** die Schiebemittel Folgendes umfassen:
▪ einen Exzenterantrieb (4.5.1), der an dem Stift (4.3) fixiert ist, mit der Fähigkeit, sich um eine Querachse in Bezug auf die Längsachse des Stabes (3) zu drehen, und umfassend ein Gehäuse zum Aufnehmen eines Stabes (4.5.2),
▪ einen Stab (4.5.2), der dazu ausgelegt ist, in das Gehäuse des Antriebs (4.5.1) eingesetzt zu sein,
wobei der Stab (4.5.2) zum Übertragen einer Drehbewegung auf den Antrieb (4.5.1) geeignet ist.

9. Vorrichtung (10) nach Anspruch 7, **dadurch gekennzeichnet, dass** der Stift (4.3) ein Gewindestift ist, der eine Gewindefläche (4.3.1) in zumindest einem Abschnitt seiner Erstreckung und einen Kopf umfasst, der dazu ausgelegt ist, das Schiebeelement (4.4) zu schieben.

10. Vorrichtung (10) nach einem der vorhergehenden Ansprüche, **dadurch gekennzeichnet, dass** die Leisten derart voneinander beabstandet angeordnet sind, dass ein Durchgangsschlitz zwischen angrenzenden Leisten vorhanden ist.

11. Vorrichtung (10) nach einem der vorhergehenden Ansprüche, **dadurch gekennzeichnet, dass** der Verbindungsmechanismus (4.2) des Endteils (4) ein Gehäuse umfasst, das zum Einsetzen des zweiten Endes (3.2) des Stabes (3) geeignet ist, wobei vorzugsweise das zweite Ende (3.2) des Stabes (3) und das Gehäuse mit einem Gewinde versehen sind.

12. System (100) zum Platzieren von auf einer Rolle (20) aufgewickeltem Verbundmaterial (22), **dadurch gekennzeichnet, dass** das System (100) Folgendes umfasst:
▪ eine Maschine (30), vorzugsweise eine automatische Faserplatzierungsmaschine, die zum Platzieren des Verbundmaterials (22) ausgelegt ist, wobei die Maschine (30) Mittel zum Drehen der Rolle (20) in Bezug auf ihre Achse (20.1) umfasst, und
▪ eine Vorrichtung (10) nach einem der Ansprüche 1 bis 11;
wobei
die Maschine (30) derart ausgelegt ist, dass sie die Stützung der Vorrichtung (10) an einer in der Maschine (30) installierten Rolle (20) ermöglicht, so dass das Drehen der Rolle (20) das Drehen der Vorrichtung bei derselben Lineargeschwindigkeit und in gegenläufiger Richtung in Bezug auf die Drehrichtung der Rolle (20) bewirkt.

13. Verfahren zum Trennen, Aufwickeln und Entnehmen eines Hilfsmaterials (21), das an einem auf einer Rolle (20) aufgewickelten Verbundmaterial (22) haftet, **dadurch gekennzeichnet, dass** es die folgenden Schritte umfasst:
a) Bereitstellen eines Systems (100) nach Anspruch 12 und einer Rolle (20), die aufgewickeltes Verbundmaterial (22) umfasst, wobei das Verbundmaterial (22) an einem Hilfsmaterial (21) haftet und wobei der Verbindungsmechanismus (4.2) der Vorrichtung (10) mit dem zweiten Ende (3.2) des Stabes (3) der Vorrichtung (10) gekoppelt wird,
b) Befestigen des Anfangsendes des Hilfsmaterials (21) an den Leisten (2) der Vorrichtung (10),
c) Stützen der Vorrichtung (10) an der Rolle (20),
d) Drehen der Rolle (20) zum Platzieren des darauf aufgewickelten Verbundmaterials, wobei sich das Hilfsmaterial (21) von dem Verbundmaterial (22) trennt und das Hilfsmaterial (21) auf die Leisten (2) der Vorrichtung (10) aufgewickelt wird, bis ein Volumen von Hilfsmaterial (21) aufgewickelt ist,
e) Entkoppeln des Endteils (4), um den durch die mindestens zwei Leisten (2) definierten Abschnitt zu reduzieren, und
f) Entnehmen des auf die Vorrichtung (10) aufgewickelten Hilfsmaterials (21).

## Revendications

1. Dispositif (10) d'enroulement d'un matériau auxiliaire (21) initialement collé à un matériau composite (22) enroulé sur une bobine (20), le dispositif (10) comprenant :
un mécanisme de support (1) ;
au moins deux lamelles (2), reliées au mécanisme de support (1) et agencées de telle sorte qu'elles forment sensiblement un élément tubulaire, définissant ainsi une section interne entre elles, dans lequel les au moins deux lamelles (2) comprennent une première extrémité (2.1) et une seconde extrémité (2.2) ;
une barre (3) ; et
une partie d'extrémité (4) ;
dans lequel la barre (3) est solidement fixée au niveau d'une première extrémité (3.1) au mécanisme de support (1), agencée longitudinalement le long de l'intérieur de la section interne définie par les au moins deux lamelles (2), et configurée pour être reliée au niveau d'une seconde extrémité (3.2) à la partie d'extrémité (4) ; et
dans lequel la partie d'extrémité (4) comprend un mécanisme de liaison (4.2) configuré pour être couplé, de manière à pouvoir être désaccouplé, avec la seconde extrémité (3.2) de la barre (3), de telle sorte que dans l'état couplé de la partie d'extrémité (4) la section interne définie par les au moins deux lamelles (2) est plus grande qu'elle ne l'est dans l'état désaccouplé de la partie d'extrémité (4) ;
le dispositif (10) étant **caractérisé en ce qu'**il comprend également un bras (5) fixé au moyen d'un élément de fixation rotatif au mécanisme de support (1), ledit bras (5) étant un bras pivotant comprenant un ressort de pression (5.1), dans une situation d'utilisation ledit bras permettant au dispositif (10) de pivoter et d'être agencé supporté sur la bobine (20) de matériau composite (22) à tout moment.

2. Dispositif (10) selon la revendication 1, **caractérisé en ce qu'**au moins l'une des lamelles (2) est fixée au niveau de la première extrémité (2.1) au mécanisme de support (1) et supportée au niveau de la seconde extrémité (2.2) sur la partie d'extrémité (4) de telle sorte que le support sur la partie d'extrémité (4) détermine la taille de la section interne définie par les lamelles (2) dans la région de la seconde extrémité (2.2).

3. Dispositif (10) selon la revendication 2, **caractérisé en ce que** la partie d'extrémité (4) comprend une réduction de section (4.1) sur laquelle la seconde extrémité (2.2) de l'au moins une des lamelles (2) est supportée.

4. Dispositif (10) selon la revendication 2 ou 3, **caractérisé en ce que** la configuration des lamelles (2) est telle que lorsque le mécanisme de liaison (4.2) est désaccouplé de la seconde extrémité (3.2) de la barre (3), les lamelles (2) se plient dans la région de la seconde extrémité (2.2), produisant une diminution progressive de la section interne définie par lesdites lamelles (2) dans la direction longitudinale de la barre (3).

5. Dispositif (10) selon la revendication 1, **caractérisé en ce que** les au moins deux lamelles (2) incluent au moins une première lamelle (2.5) fixée au niveau de sa première extrémité (2.1) au mécanisme de support (1), et au moins une seconde lamelle (2.6) fixée au niveau de sa seconde extrémité (2.2) à la partie d'extrémité (4), de telle sorte que le désaccouplement de la partie d'extrémité (4) par rapport à la barre (3) entraîne la séparation de l'au moins une seconde lamelle (2.6) par rapport au mécanisme de support (1).

6. Dispositif (10) selon la revendication 1, **caractérisé en ce qu'**il comprend au moins deux plaques (3.4), et **en ce que** la barre (3) comprend au moins deux fentes (3.3) parallèles à l'axe longitudinal de la barre (3),
dans lequel lesdites au moins deux fentes (3.3) comprennent dans au moins une partie de leur extension au moins un plan incliné (3.3.1), chaque fente (3.3) étant configurée pour abriter une plaque (3.4),
dans lequel chaque plaque (3.4) comprend au moins un plan incliné (3.4.1) configuré pour être supporté sur l'au moins un plan incliné (3.3.1) supplémentaire de la fente (3.3) qui l'abrite, les plaques (3.4) étant fixées à la barre (3) de manière coulissante au moyen d'éléments de retenue (3.5),
dans lequel chaque lamelle (2) est fixée à une plaque (3.4),
dans lequel la partie d'extrémité (4) comprend un élément poussant (4.4) mobile dans la direction longitudinale de la barre (3) et un moyen poussant configuré pour déplacer l'élément poussant (4.4),
dans lequel
• dans l'état désaccouplé de la partie d'extrémité (4), une extrémité (3.4.3) des plaques fait saillie depuis les fentes (3.3) vers l'élément poussant (4.4), et
• dans l'état couplé de la partie d'extrémité (4), l'élément poussant (4.4) pousse les extrémités (3.4.3) des plaques (3.4) vers le mécanisme de support (1), entraînant le coulissement des plans inclinés (3.4.1) des plaques (3.4) sur les plans inclinés (3.3.1) des fentes (3.3), ce qui facilite un mouvement radial des lamelles (2) en raison de l'action conjointe des plans inclinés des plaques et des fentes.

7. Dispositif (10) selon la revendication précédente, **caractérisé en ce que** l'élément poussant (4.4) a une forme annulaire et le mécanisme de liaison de la partie d'extrémité (4) comprend une broche (4.3) configurée pour être couplée avec la seconde extrémité (3.2) de la barre (3), la broche (4.3) étant insérée à travers l'élément poussant (4.4), de telle sorte que l'élément poussant (4.4) est mobile de manière linéaire dans la direction longitudinale de la barre (3).

8. Dispositif (10) selon la revendication 7, **caractérisé en ce que** le moyen poussant comprend :
• un entraînement excentrique (4.5.1) fixé à la broche (4.3), avec la capacité de tourner autour d'un axe transversal par rapport à l'axe longitudinal de la barre (3), et comprenant un boîtier pour recevoir une tige (4.5.2),
• une tige (4.5.2) configurée pour être insérée dans le boîtier de l'entraînement (4.5.1),
dans lequel la tige (4.5.2) est adaptée pour transmettre un mouvement rotatif à l'entraînement (4.5.1).

9. Dispositif (10) selon la revendication 7, **caractérisé en ce que** la broche (4.3) est une broche filetée comprenant une surface filetée (4.3.1) dans au moins une partie de son extension et une tête configurée pour pousser l'élément poussant (4.4).

10. Dispositif (10) selon l'une quelconque des revendications précédentes, **caractérisé en ce que** les lamelles sont agencées espacées les unes des autres, de telle sorte qu'il y a une fente traversante entre des lamelles contiguës.

11. Dispositif (10) selon l'une quelconque des revendications précédentes, **caractérisé en ce que** le mécanisme de liaison (4.2) de la partie d'extrémité (4) comprend un boîtier adapté pour insérer la seconde extrémité (3.2) de la barre (3), de préférence la seconde extrémité (3.2) de la barre (3) et le boîtier étant filetés.

12. Système (100) de placement de matériau composite (22) enroulé sur une bobine (20), **caractérisé en ce que** le système (100) comprend :
• une machine (30), de préférence une machine de placement de fibres automatique, configurée pour placer le matériau composite (22), dans lequel la machine (30) comprend un moyen pour faire tourner la bobine (20) par rapport à son axe (20.1), et
• un dispositif (10) selon l'une quelconque des revendications 1 à 11 ;
dans lequel la machine (30) est configurée de telle sorte qu'elle permet le support du dispositif (10) sur une bobine (20) installée dans la machine (30), de telle sorte que la rotation de la bobine (20) entraîne la rotation du dispositif à la même vitesse linéaire et dans une direction de contre-rotation par rapport à la direction de rotation de la bobine (20).

13. Procédé de séparation, d'enroulement, et d'extraction d'un matériau auxiliaire (21) collé à un matériau composite (22) enroulé sur une bobine (20), **caractérisé en ce qu'**il comprend les étapes suivantes :
a) la fourniture d'un système (100) selon la revendication 12 et d'une bobine (20) comprenant un matériau composite (22) enroulé, dans lequel le matériau composite (22) est collé à un matériau auxiliaire (21) et dans lequel le mécanisme de liaison (4.2) du dispositif (10) est couplé avec la seconde extrémité (3.2) de la barre (3) du dispositif (10),
b) la fixation de l'extrémité initiale du matériau auxiliaire (21) aux lamelles (2) du dispositif (10),
c) le support du dispositif (10) sur la bobine (20),
d) la rotation de la bobine (20) pour placer le matériau composite enroulé sur celle-ci, le matériau auxiliaire (21) se séparant du matériau composite (22) et ledit matériau auxiliaire (21) étant enroulé sur les lamelles (2) du dispositif (10), jusqu'à enrouler un volume de matériau auxiliaire (21),
e) le désaccouplement de la partie d'extrémité (4) pour réduire la section définie par les au moins deux lamelles (2), et
f) l'extraction du matériau auxiliaire (21) enroulé sur le dispositif (10).
